# EUROPÄISCHE PATENTSCHRIFT

(11) **EP 1 130 341 B1**
(45) Veröffentlichungstag und Bekanntmachung des Hinweises auf die Patenterteilung: **06.09.2006**
(21) Anmeldenummer: 01100708.5
(22) Anmeldetag: 12.01.2001
(51) Int. Cl.: F24H 9/12, F24D 19/10, F24H 9/14, F04D 29/42

(54) **Anschlussvorrichtung für eine Heizungspumpe**
Connecting device for a heating pump
Dispositif de raccordement pour une pompe de chauffage

(30) Priorität: 21.02.2000 DE 10007924
(43) Veröffentlichungstag der Anmeldung: 05.09.2001
(73) Patentinhaber: WILO AG, 44263 Dortmund (DE)
(72) Erfinder: Briggs, David, 92800 Puteaux (FR)
(74) Vertreter: COHAUSZ DAWIDOWICZ HANNIG & SOZIEN

(56) Entgegenhaltungen:
- EP-A- 0 825 387
- EP-A- 0 918 197
- EP-A- 0 953 808
- DE-A- 19 912 284

## Beschreibung

Die Erfindung betrifft eine Anschlußvorrichtung zum Anschluß an die Pumpe einer Heizungsanlage, umfassend ein Vorrichtungsgehäuse mit mindestens vier Öffnungen, von denen zwei Öffnungen an die Pumpe und die beiden anderen Öffnungen an die Heizungsanlage anschließbar sind.

Derartige Anschlußvorrichtungen sind allgemein bekannt. Sie werden insbesondere in sogenannten "Hydroblöcken" eingesetzt, die hydraulisch sowohl an den Heizwasserkreislauf als auch zur Erwärmung des Brauchwassers an den Sanitärwasserkreislauf angeschlossen sind. Eine derartige Hydraulikbaugruppe für eine kombinierte Heizwasser- und Sanitärwasseranlage ist beispielsweise aus der DE 196 32 605 A1 bekannt.

Die Anschlußvorrichtungen dienen dabei als "hydraulisches Interface" dazu, die oftmals in genormten Abmessungen bzw. Anordnungen vorhandene Drucköffnung und Saugöffnung der Pumpe mit den bei unterschiedlichen Heizungsanlagen verschieden ausgeführten und verschieden angeordneten Anschlüssen zu verbinden.

Die europäische Patentanmeldung EP 0 825 387 offenbart beispielsweise eine Hydraulikbaupumpe für eine kombinierte Heißwasser- und Sanitärwasseranlage mit einer Pumpe, mindestens einer Vorrichtung zum Erwärmen von Räumen, insbesondere ein Heizkörper, eine Wärmequelle und mindestens einem Wärmetauscher zum Erwärmen von Heiz- und/oder Sanitärwasser. In dieser Schrift wird es ferner als vorteilhaft beschrieben, zwei getrennte Pumpen zu verwenden, wobei eine Pumpe vor den Heizkörpern im Vorlauf und die zweite Pumpe hinter dem Wärmetauscher zum Erwärmen des Sanitärwassers im Rücklauf anzuordnen ist. Alternativ kann auch eine Pumpe vor dem Wärmetauscher zum Erwärmen des Sanitärwassers im Vorlauf und die andere Pumpe hinter den Heizkörpern im Rücklauf angeordnet werden. Die Pumpen können entweder extern durch übergeordnete Regler oder autark mittels einer integrierten Sensorik zum internen Messen der Pumpendrehzahl oder der Druckdifferenz geregelt werden. Eine genaue Angabe der Anordnung und Ausführung der Sensorik geht aus dieser Schrift nicht hervor.

Zur Steuerung oder Regelung der Pumpe und/oder weiterer hydraulischer Komponenten einer Heizungsanlage oder des Hydroblocks, insbesondere von Ventilen, sind oft verschiedene Meßeinrichtungen oder Sensoren erforderlich, die insbesondere in der Nähe der Pumpe oder am Hydroblock angeordnet sind. Dazu ist es bekannt, daß die Anschlußvorrichtungen eine oder mehrere zusätzliche Öffnungen aufweisen, an die jeweils ein in einem separaten Gehäuse angeordneter Sensor bzw. Meßeinrichtung angeschlossen werden kann. Hierdurch wird nicht nur der Platzbedarf der Anschlußvorrichtung vergrößert, sondern es werden auch zusätzliche Montagearbeiten erforderlich, wodurch zusätzliche Kosten beim Einbau der Anschlußvorrichtung bzw. des Hydroblocks entstehen.

Eine derartige Anordnung von Sensoren innerhalb eines separaten Gehäuses ist beispielsweise aus der europäischen Patentanmeldung EP 0 953 808 bekannt. Hierbei ist ein Sensor in einem wasserdichten Gehäuse angeordnet und bildet mit diesem eine gegen die Umgebung abgedichtete Einheit, die über einen Schnellverschluss, insbesondere über eine Nadel oder über ein Schraubgewinde mit der Wandung eines Strömungskanals verbindbar ist. Der Sensor befindet sich dabei direkt im zu analysierenden Medium. Neben dem zusätzlichen Platzbedarf des wasserdichten Gehäuses und der zusätzlichen Montagearbeiten, die das Einstecken oder Einschrauben der abgedichteten Einheit in die Anschlussvorrichtung erfordert, ist ferner eine Abdichtung zwischen dem Gehäuse der Einheit und der Wandung des Strömungskanals erforderlich.

Aufgabe der vorliegenden Erfindung ist es daher, eine Anschlußvorrichtung der eingangs genannten Art zu schaffen, die bei einfacher Konstruktion, leichter Handhabbarkeit und geringen Herstellungskosten einschließlich weiterer anzuschließender Komponenten nur einen geringen Bauraum beansprucht und die einfach und schnell einzubauen und anzuschließen ist und somit nur geringe Montagekosten verursacht.

Diese Aufgabe wird durch eine Anschlußvorrichtung nach Anspruch 1 gelöst. Wesentlich ist dabei, daß mindestens ein Sensor bzw. eine Meßeinrichtung vollständig in das Vorrichtungsgehäuse der Anschlußvorrichtung integriert ist, und der Sensor in einem Sensorgehäuse angeordnet ist, das einstückig an das Vorrichtungsgehäuse angeformt ist. Der Hauptvorteil liegt dabei darin, daß zusätzlicher Platzbedarf für die zur Steuerung oder Regelung der Heizungsanlage erforderlichen Sensoren bzw. Meßeinrichtungen nicht mehr gegeben ist. Von außen an weitere Anschlußöffnungen der Anschlußvorrichtung montierte Sensoren sind hierbei nicht erforderlich. Die Funktion der Sensoren wird dabei zumindest teilweise innerhalb des Vorrichtungsgehäuses der Anschlußvorrichtung ausgeführt. Auch sind insbesondere bei einer vollständigen Integration zusätzliche Anschlußarbeiten nicht erforderlich, so daß die Montagekosten erheblich reduziert werden können. Die Konstruktion und die Handhabung der Anschlußvorrichtung sind einfach, so daß sie preiswert herzustellen und einfach zu bedienen ist.

Besonders vorteilhaft ist es, wenn der Sensor in einem Sensorgehäuse angeordnet ist, das einstückig an das Vorrichtungsgehäuse angeformt ist. Das Sensorgehäuse kann dabei vollständig geschlossen oder aber mit einem abnehmbaren Deckel ausgeführt sein, durch das der in die Anschlußvorrichtung integrierte Sensor eingesetzt oder entnommen werden kann. Hierdurch können beispielsweise Wartungsarbeiten besonders einfach durchgeführt werden.

Der Sensor bzw. die Meßeinrichtung kann insbesondere dazu verwendet werden, den Druck, die Temperatur und/oder den Durchfluß der geförderten Flüssigkeit zu bestimmen. Die erfindungsgemäßen Vorteile können in besonders großem Maße dann genutzt werden, wenn mehrere Sensoren zur Bestimmung verschiedener Parameter in die Anschlußvorrichtung integriert sind.

Zur Erzielung der obengenannten Vorteile können in gleicher Weise auch andere hydraulische Komponenten vollständig oder teilweise in die Anschlußvorrichtung integriert sein. Insbesondere wird vorgeschlagen, daß ein Filter für das von der Pumpe geförderte Heizwasser in das Vorrichtungsgehäuse integriert ist. Ein separater Filter der außerhalb der Anschlußvorrichtung angeordnet werden muß und zu einem nicht unerheblichen zusätzlichen Platzbedarf führt, ist auf diese Weise entbehrlich.

Auch eine Entlüftungseinrichtung zur Entlüftung der von der Pumpe geförderten Flüssigkeit kann in vorteilhafter Weise in das Vorrichtungsgehäuse integriert sein. Der Anschluß einer separaten Baugruppe zur Entfernung der in dem Heizwasser gegebenenfalls vorhandenen Gasbläschen ist dann nicht mehr erforderlich.

Ferner kann in vorteilhafter Weise auch eine Entwässerungseinrichtung zum Ablassen des von der Pumpe geförderten Heizwassers aus der Heizungsanlage in das Vorrichtungsgehäuse integriert sein. Die zuvor genannten Vorteile wirken sich dabei besonders stark aus, wenn gleichzeitig mehrere der zuvor genannten hydraulischen Komponenten in die Anschlußvorrichtung integriert sind.

Günstig ist es, wenn die Anschlußvorrichtung aus Kunststoff gespritzt oder gegossen ist. Auf diese Weise wird nicht nur ein besonders geringes Gewicht erzielt, sondern die durch die Integration der einzelnen Komponenten bedingte Form des Vorrichtungsgehäuses kann so besonders einfach und kostengünstig hergestellt werden.

In einer bevorzugten Ausführungsform sind die beiden Öffnungen zum Anschluß an die Pumpe in einer ebenen Seitenfläche des Vorrichtungsgehäuses eingebracht. Diese als "hydraulische Schnittstelle" ausgebildete Seitenfläche kann dabei besonders schnell und einfach an die Seitenfläche einer Pumpe mit einer entsprechend ausgeführten "hydraulischen Schnittstelle" angeschlossen werden.

Besonders vorteilhaft ist es dabei, wenn mindestens eine elektrische Schnittstelle, insbesondere ein Stecker in die Seite des Vorrichtunggehäuses eingebracht ist, die die beiden Öffnungen zum Anschluß an die Pumpe aufweist. Hierdurch können auf besonders einfache Weise beim Anschluß der Pumpe an die Anschlußvorrichtung sowohl die hydraulischen als auch die elektrischen Verbindungen der Sensoren oder Meßeinrichtungen in einem einzigen Montageschritt gleichzeitig vorgenommen werden.

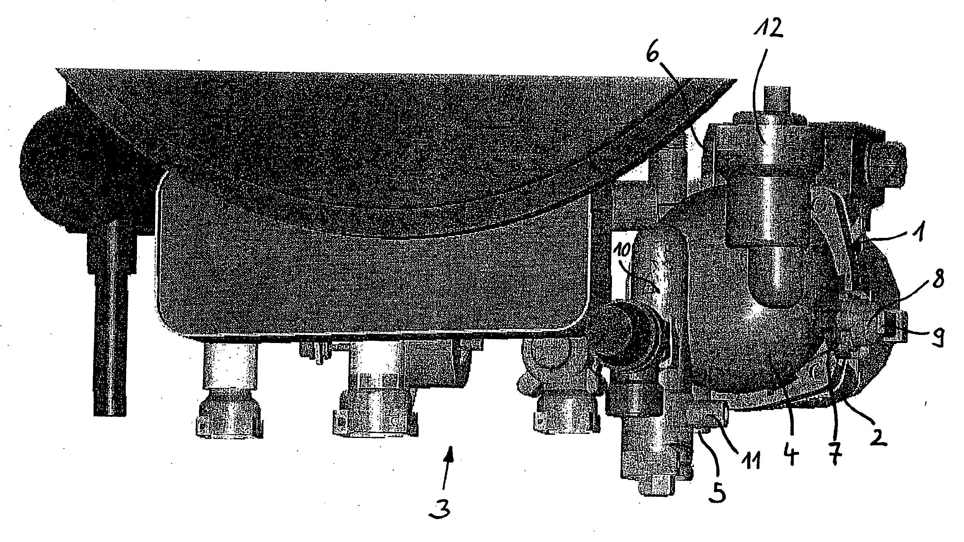

Weitere Vorteile und Merkmale der Erfindung ergeben sich aus der nachfolgenden Beschreibung und den in der Zeichnung dargestellten Ausführungsbeispiel.

Die in der Zeichnung dreidimensional dargestellte erfindungsgemäße Anschlußvorrichtung 1 ist über eine flache hydraulische Schnittstelle an die Pumpe 2 einer Hydraulikbaugruppe 3 für eine kombinierte Heizwasser- und Sanitärwasseranlage angeschlossen. Die beiden Öffnungen zum Anschluß der Anschlußvorrichtung 1 an die Pumpe 2 sind dabei in einer ebenen Seitenfläche des Vorrichtungsgehäuses 4 eingebracht. Ferner weist das Vorrichtungsgehäuse 4 einen nach unten gerichteten Stutzen mit einer Einlaßöffnung 5 sowie einen nach oben gerichteten Stutzen mit einer Auslaßöffnung 6 zum Anschluß an die Heizungsanlage auf.

In das Vorrichtungsgehäuse 4 ist einstückig ein Sensorgehäuse 7 eingeformt, in das ein nicht näher dargestellter Drucksensor eingesetzt ist. Dabei ist das Sensorgehäuse 7 durch einen Deckel 8 verschlossen, der Kontakte 9 zum Anschluß des Drucksensors aufweist. Auf diese Weise ist der Drucksensor in das Vorrichtungsgehäuse 4 integriert.

Außerdem ist eine Filtereinrichtung 10 zum Filtern der von der Pumpe 2 geförderten Flüssigkeit mit einer Entwässerungseinrichtung 11 zum Ablassen der von der Pumpe 2 geförderten Flüssigkeit aus der Heizungsanlage in die Anschlußvorrichtung 1 integriert. Auch eine Entlüftungseinrichtung 12 zur Entlüftung der von der Pumpe 2 geförderten Flüssigkeit ist in den oberen Teil des Vorrichtungsgehäuses 4 integriert.

Durch die Integration des Drucksensors sowie der Filtereinrichtung 10 mit der Entwässerungseinrichtung 11 und der Entlüftungseinrichtung 12 in das Gehäuse 4 der Anschlußvorrichtung 1 kann der zum Einbau dieser Komponenten benötigte Raum erheblich reduziert werden. Ferner sind mit Anschluß des Hydroblockes 3 gleichzeitig auch die genannten hydraulischen Komponenten an die Heizungsanlage angeschlossen.

## Patentansprüche

1. Anschlussvorrichtung (1) zum Anschluss an die Pumpe (2) einer Heizungsanlage, mit einem Vorrichtungsgehäuse (4) mit mindestens vier Öffnungen, von denen zwei Öffnungen an die Pumpe (2) und die beiden anderen Öffnungen an die Heizungsanlage anschließbar sind, wobei
mindestens ein Sensor vollständig in das Vorrichtungsgehäuse (4) integriert ist, wobei der Sensor in einem Sensorgehäuse (7) angeordnet ist, **dadurch gekennzeichnet, dass** das Sensorgehäuse (7) einstückig an das Vorrichtungsgehäuse (4) angeformt ist.

2. Anschlussvorrichtung nach Anspruch 1, **dadurch gekennzeichnet, dass** der Sensor ein Drucksensor oder ein Temperatursensor oder ein Durchflusssensor ist.

3. Anschlussvorrichtung nach einem der Ansprüche 1 oder 2, **dadurch gekennzeichnet, dass** ein Filter (10) für die von der Pumpe (2) geförderte Flüssigkeit vollständig oder teilweise in das Vorrichtungsgehäuse (4) integriert ist.

4. Anschlussvorrichtung nach einem der vorherigen Ansprüche, **dadurch gekennzeichnet, dass** ein Entlüfter (12) zur Entlüftung der von der Pumpe (2) geförderten Flüssigkeit vollständig oder teilweise in das Vorrichtungsgehäuse (4) integriert ist.

5. Anschlussvorrichtung nach einem der vorherigen Ansprüche, **dadurch gekennzeichnet , dass** eine Entwässerungseinrichtung (11) zum Ablassen der von der Pumpe (2) geförderten Flüssigkeit aus der Heizungsanlage vollständig oder teilweise in das Vorrichtungsgehäuse (4) integriert ist.

6. Anschlussvorrichtung nach einem der vorherigen Ansprüche, **dadurch gekennzeichnet, dass** sie aus Kunststoff gefertigt ist.

7. Anschlussvorrichtung nach einem der vorherigen Ansprüche, **dadurch gekennzeichnet, dass** die beiden Öffnungen zum Anschluß an die Pumpe (2) in einer ebenen Seitenfläche des Vorrichtungsgehäuses (4) eingebracht sind.

8. Anschlussvorrichtung nach Anspruch 78, **dadurch gekennzeichnet , dass** mindestens eine elektrische Schnittstelle, insbesondere ein Stecker, in die Seite des Vorrichtungsgehäuses eingebracht ist, die die beiden Öffnungen zum Anschluß an die Pumpe (2) aufweist.

## Claims

1. Connecting device (1) for connecting to the pump (2) of a heating system, with a device housing (4) with at least four openings, two of which openings can be connected to the pump (2) and both the other openings to the heating system, in which at least one sensor is integrated completely into the device housing (4), in which the sensor is arranged in a sensor housing (7),
**characterised in that** the sensor housing (7) is formed on the device housing (4) in one piece.

2. Connecting device according to claim 1, **characterised in that** the sensor is a pressure sensor or a temperature sensor or a flow sensor.

3. Connecting device according to one of claims 1 or 2, **characterised in that** a filter (10) for the liquid supplied by the pump (2) is integrated completely or partly into the device housing (4).

4. Connecting device according to one of the previous claims,
**characterised in that** a ventilator (12) for ventilating the liquid supplied by the pump (2) is integrated completely or partly into the device housing (4).

5. Connecting device according to one of the previous claims,
**characterised in that** a draining device (11) for draining the liquid supplied by the pump (2) from the heating system is integrated completely or partly into the device housing (4).

6. Connecting device according to one of the previous claims, **characterised in that** it is made of plastic.

7. Connecting device according to one of the previous claims,
**characterised in that** both openings for connecting to the pump (2) are provided in a flat side of the device housing (4).

8. Connecting device according to claim 78, **characterised in that** at least one electrical interface, particularly a plug, is provided in the side of the device housing, which has the two openings for connecting to the pump (2).

## Revendications

1. Dispositif de raccordement (1) pour le raccordement à la pompe (2) d'une installation de chauffage, avec un carter de dispositif (4) avec au moins quatre ouvertures parmi lesquelles deux ouvertures peuvent être raccordées à la pompe (2) et les deux autres à l'installation de chauffage, au moins un capteur étant complètement intégré dans le carter de dispositif (4), le capteur étant disposé dans un carter de capteur (7),
**caractérisé par le fait que** le carter de capteur (7) est conformé d'une seule pièce sur le carter de dispositif (4).

2. Dispositif de raccordement selon la revendication 1,
**caractérisé par le fait que** le capteur est un capteur de pression ou un capteur de température ou un capteur de débit.

3. Dispositif de raccordement selon l'une des revendications 1 et 2,
**caractérisé par le fait qu'**un filtre (10) pour le liquide transporté par la pompe (2) est totalement ou partiellement intégré dans le carter de dispositif (4).

4. Dispositif de raccordement selon l'une des revendications précédentes,
**caractérisé par le fait qu'**un aérateur (12) pour l'aération du liquide transporté par la pompe (2) est totalement ou partiellement intégré dans le carter de dispositif (4).

5. Dispositif de raccordement selon l'une des revendications précédentes,
**caractérisé par le fait qu'**un dispositif de drainage (11) pour l'évacuation du liquide transporté par la pompe (2) hors de l'installation de chauffage est totalement ou partiellement intégré dans le carter de dispositif (4).

6. Dispositif de raccordement selon l'une des revendications précédentes,
**caractérisé par le fait qu'**il est fabriqué en matière synthétique.

7. Dispositif de raccordement selon l'une des revendications précédentes,
**caractérisé par le fait que** les deux ouvertures pour le raccordement à la pompe (2) sont logées dans une face latérale plane du carter de dispositif (4).

8. Dispositif de raccordement selon la revendication 7,
**caractérisé par le fait qu'**au moins un interface électrique, en particulier un connecteur, est monté dans le côté du carter de dispositif qui présente les deux ouvertures pour le raccordement à la pompe (2).
